# FASCICULE DE BREVET EUROPEEN

(11) **EP 1 723 466 B1**
(45) Date de publication et mention de la délivrance du brevet: **05.11.2008**
(21) Numéro de dépôt: 05736620.5
(22) Date de dépôt: 08.03.2005
(51) Int. Cl.: G02F 1/365

(54) **DISPOSITIF DE GENERATION D'UNE LUMIERE POLYCHROMATIQUE A SPECTRE CONTINU**
VORRICHTUNG ZUM ERZEUGEN VON POLYCHROMATISCHEM LICHT MIT KONTINUIERLICHEM SPEKTRUM
DEVICE FOR GENERATING POLYCHROMATIC LIGHT WITH A CONTINUOUS SPECTRUM

(30) Priorité: 12.03.2004 FR 0402589
(43) Date de publication de la demande: 22.11.2006
(73) Titulaire: HORIBA ABX SAS, 34090 Montpellier (FR); Université de Limoges, 87032 Limoges (FR); CENTRE NATIONAL DE LA RECHERCHE SCIENTIFIQUE (CNRS), 75794 Paris Cedex 16 (FR)
(72) Inventeur: NERIN, Philippe, F-30114 Nages et Solorgues (FR); CHAMPERT, Pierre-Alain, F-22450 Langoat (FR); FEVRIER, Sébastien, F-87000 Limoges (FR); ROY, Philippe, F-87100 Limoges (FR); COUDERC, Vincent, F-87430 Verneuil sur Vienne (FR); LEPROUX, Philippe, F-87000 Limoges (FR); GROSSARD, Ludovic, F-87000 Limoges (FR)
(74) Mandataire: Bezault, Jean
(86) Numéro de dépôt international: PCT/FR2005/000550
(87) Numéro de publication internationale: WO 2005/098527

(56) Documents cités:
- WO-A1-20/05071483
- PATENT ABSTRACTS OF JAPAN vol. 1999, no. 09, 30 juillet 1999 (1999-07-30) & JP 11 119269 A (FURUKAWA ELECTRIC CO LTD:THE), 30 avril 1999 (1999-04-30)
- HUSAKOU A V ET AL: "Supercontinuum generation of higher-order solitons by fission in photonic crystal fibers" PHYSICAL REVIEW LETTERS, NEW YORK,NY, US, vol. 87, no. 20, 12 novembre 2001 (2001-11-12), pages 203901-1, XP002290714 ISSN: 0031-9007
- ILEV I ET AL: "HIGHLY EFFICIENT WIDEBAND CONTINUUM GENERATION IN A SINGLE-MODE OPTICAL FIBER BY POWERFUL BROADBAND LASER PUMPING" APPLIED OPTICS, OPTICAL SOCIETY OF AMERICA,WASHINGTON, US, vol. 35, no. 15, 20 mai 1996 (1996-05-20), pages 2548-2553, XP000589853 ISSN: 0003-6935
- LEHTONEN M ET AL: "Supercontinuum generation in a highly birefringent microstructured fiber" APPLIED PHYSICS LETTERS, AMERICAN INSTITUTE OF PHYSICS. NEW YORK, US, vol. 82, no. 14, 7 avril 2003 (2003-04-07), pages 2197-2199, XP012033679 ISSN: 0003-6951

## Description

L'invention concerne le domaine des sources de lumière, et plus particulièrement les sources de lumière blanche.

Comme le sait l'homme de l'art, une lumière blanche à large spectre peut être générée de diverses manières.

Une première manière consiste à utiliser une source émettant directement une lumière blanche à large spectre, comme par exemple une lampe à incandescence, une lampe à quartz ou un arc au xénon. Dans ce cas, le spectre d'émission est sensiblement continu, mais la luminance délivrée est assez faible et l'émission de lumière est isotrope, rendant ainsi impossible tant la focalisation sur de très petites surfaces que la formation d'un faisceau cohérent spatialement (ou à faible divergence). En outre, l'encombrement de telles sources est important. Par ailleurs, la durée de vie de ces sources est relativement courte. De surcroît, les sources à arc ou à incandescence génèrent beaucoup de chaleur et ont par conséquent un mauvais rendement.

Une deuxième manière consiste à mettre en parallèle un grand nombre de diodes laser monofréquence émettant des photons de longueurs d'onde différentes. Dans ce cas, l'encombrement est relativement faible, mais le spectre délivré n'est pas continu, la puissance délivrée est assez faible, le bruit de partition est relativement élevé et des variations d'intensité peuvent survenir entre diodes.

Une troisième manière consiste à pomper une fibre optique microstructurée avec un laser monofréquence, comme par exemple un laser à solide, tel qu'un laser titane-saphir, opérant en régime pulsé avec des impulsions de l'ordre de la picoseconde à la femtoseconde pour des fréquences de répétition allant du kilohertz au mégahertz. Un tel pompage induit dans la fibre microstructurée des effets non linéaires qui permettent la génération de photons à différentes longueurs d'onde. Ce type de source est notamment décrit dans le document de J. K. Ranka et al, Optics Letters, vol. 25, N°1, p. 25-27, 2000, et dans le document de J.C. Knight et al, Optics Letters, vol. 26, N°17, p. 1356-1358, 2001. En raison du type de laser utilisé, une telle source de lumière est très coûteuse et de surcroît très encombrante, excluant ainsi toute utilisation dans un produit intégré.

Une quatrième manière est décrite dans le document brevet WO 2005/071483, faisant partie de l'état de la technique au sens de l'article 54(3) CBE. Elle consiste à utiliser des moyens de pompage optique pour délivrer un rayonnement de deux longueurs d'onde d'excitation différentes dans une fibre microstructurée agencée, lorsqu'elle est excitée par ce rayonnement à des longueurs d'ordres de 532 nm et 1064 nm, pour délivrer une lumière polychromatique.

Aucune source connue n'étant entièrement satisfaisante, l'invention a donc pour but d'améliorer la situation.

Elle proprose à cet effet un dispositif de génération d'une lumière polychromatique, tel que décrit dans la revondication 1, et son utilisation dans les applications citées dans la revendication 12.

D'autres caractéristiques et avantages de l'invention apparaîtront à l'examen de la description détaillée ci-après, et des dessins annexés, sur lesquels :
• la figure 1 illustre de façon schématique un premier mode de réalisation d'un dispositif de génération de lumière polychromatique selon l'invention,
• la figure 2 illustre de façon schématique une variante de module de pompage,
• la figure 3 est un exemple de diagramme illustrant l'intensité I (en unité arbitraire) en fonction de la longueur d'onde λ (en nanomètres (ou nm)), d'une part de la lumière polychromatique, délivrée par un dispositif selon l'invention, et d'autre part de la lumière délivrée en cas de pompage par une source mono-fréquence,
• la figure 4 est un exemple de diagramme illustrant, d'une part, la variation de la dispersion Dcx d'une fibre (en ps/nm/km) en fonction de la longueur d'onde en micromètres (courbe croissante rapportée à l'axe des ordonnées situé à gauche, le zéro de dispersion survenant pour une longueur d'onde égale à environ 0,8 µm), et d'autre part, la variation de l'indice effectif neff du mode fondamental d'une fibre en fonction de la longueur d'onde en nanomètres (courbe décroissante rapportée à l'axe des ordonnées situé à droite),
• la figure 5 illustre de façon très schématique, dans une vue en coupe transversale, une fibre optique microstructurée,
• la figure 6 illustre de façon schématique un deuxième mode de réalisation d'un dispositif de génération de lumière polychromatique selon l'invention,
• la figure 7 illustre de façon schématique un troisième mode de réalisation d'un dispositif de génération de lumière polychromatique selon l'invention.

Les dessins annexés pourront non seulement servir à compléter l'invention, mais aussi contribuer à sa définition, le cas échéant.

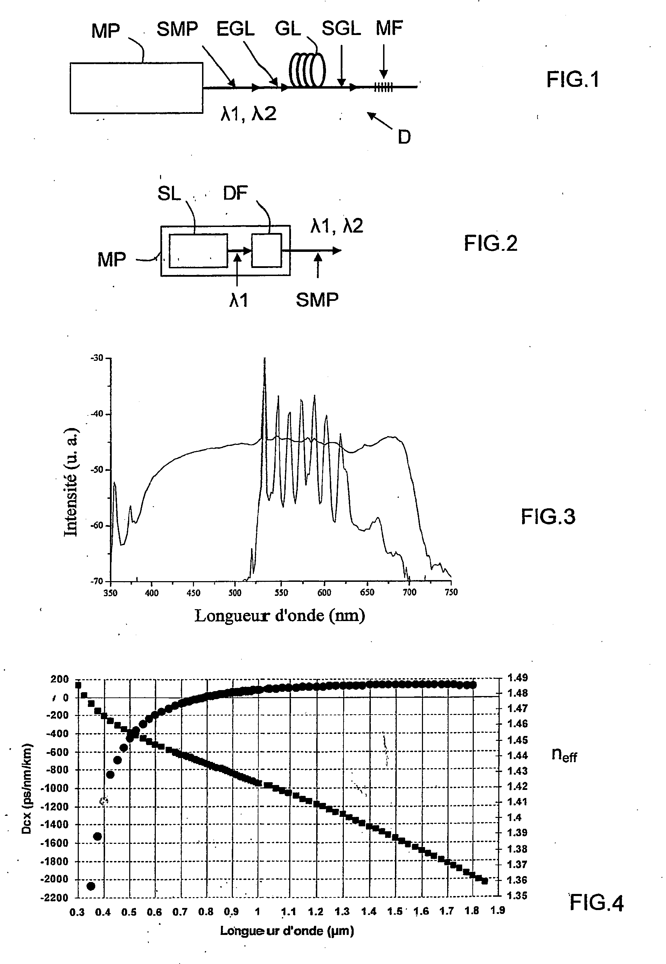

On se réfère tout d'abord à la figure 1 pour décrire un premier mode de réalisation d'un dispositif D dédié à la génération de lumière polychromatique, selon l'invention.

Un dispositif D selon l'invention comprend tout d'abord un module de pompage optique MP chargé de délivrer un rayonnement présentant au moins deux longueurs d'onde d'excitation différentes λ1 et λ2, et de préférence deux groupes de longueurs d'onde différents. Bien entendu, ce module de pompage optique MP pourrait délivrer des photons présentant plus de deux longueurs d'onde différentes ou plus de deux groupes de longueurs d'onde différents, par exemple trois ou quatre, voire plus.

Le module de pompage optique MP, multi longueurs d'onde, peut être réalisé de différentes manières. Il peut , comme illustré sur la figure 2, se présenter sous la forme d'une source laser SL mono longueur d'onde couplée à des moyens de conversion de fréquence, comme par exemple un doubleur de fréquence DF. Dans ce cas, la source laser SL alimente le doubleur de fréquence DF en photons (ou rayonnement) présentant la première longueur d'onde λ1, égale à 1064 nm, et le doubleur de fréquence DF délivre sur sa sortie SMP des photons (ou rayonnement) à la première longueur d'onde λ1 et des photons (ou rayonnement) à la seconde longueur d'onde λ2, égale à la moitié de λ1, soit 532 nm.

Par ailleurs, le module de pompage optique MP, multi longueurs d'onde, peut fonctionner soit selon un mode impulsionnel et synchronisé temporellement, soit selon un mode quasi continu ou continu.

Le dispositif D selon l'invention comprend également des moyens de guidage de lumière GL chargés, lorsqu' ils sont excités par un rayonnement comportant plusieurs longueurs d'onde, délivré par le module de pompage optique MP, dans un régime d'interaction lumière - matière non linéaire, de délivrer sur leur sortie SGL une lumière polychromatique correspondant à un "continuum". Les moyens de guidage (6C) étant constitués par la fibre optique microstructurée.

On entend ici par "lumière polychromatique", une lumière dont le spectre est dutype de celui illustré sur la figure 3 (première courbe comprise entre les longueurs d'onde 350 nm et 750 nm), c'est-à-dire sensiblement continu, et non discrétisé, en terme de longueurs d'onde (λ), sur une large bande. Comme on peut le constater sur ce diagramme, l'intensité I (ici en unité arbitraire), de la lumière polychromatique qui est délivrée par les moyens de guidage de lumière GL, varie peu sur l'intervalle compris entre environ 420 nm et environ 700 nm.

Dans une fibre optique monomode utilisant un régime de dispersion négatif (dispersion normale correspondant à une longueur d'onde inférieure à 800 nm (ou 0,8 µm) sur la figure 4), le pompage par une source mono-fréquence donne lieu à la génération de raies Raman discrètes vers les longueurs d'onde élevées (comme illustré sur la seconde courbe de la figure 3 qui est comprise entre les longueurs d'onde 500 nm et 700 nm). Aucun signal (ou un signal très faible) ne peut ainsi être généré à des longueurs d'onde plus courtes que le signal de pompe. Le nombre de raies Raman générées augmente avec l'intensité du signal injecté.

Dans le cas d'un pompage au moyen d'au moins deux longueurs d'onde (ou deux groupes de longueurs d'onde, comportant chacun au moins une longueur d'onde) judicieusement choisies, on observe alors deux modifications au niveau du profil spectral. Comme cela est illustré par la première courbe de la figure 3 (comprise entre les longueurs d'onde 350 nm et 750 nm), il apparaît en effet un élargissement spectral homogène et symétrique de part et d'autre de l'une des longueurs d'onde de pompe, ainsi qu'une minimisation des composantes Raman. Cette double modification est principalement due à un phénomène de compétition entre les effets non linéaires. L'élargissement spectral s'explique par la combinaison des effets d'automodulation de phase, de modulation de phases croisées, et des effets paramétriques (mélange à quatre ondes). L'adjonction d'une seconde puissance de pompe permet d'initier des accords de phase entre les longueurs d'onde centrées autour de 532 nm et 1064 nm (dans cet exemple) et la mise en place des effets paramétriques qui ont un seuil d'apparition inférieur à celui de l'effet Raman.

Préférentiellement, les moyens de guidage de lumière GL présentent un profil de dispersion comportant une ou plusieurs annulations associées à une ou plusieurs longueurs d'onde choisies λc.

En présence de plus de deux longueurs d'onde d'excitation, celles-ci sont préférentiellement réparties de part et d'autre de la longueur d'onde choisie λc. Ainsi, le spectre de la lumière polychromatique est réparti de manière sensiblement homogène et continue de part et d'autre de la longueur d'onde choisie λc, et donc de part et d'autre des longueurs d'onde d'excitation λ1 et λ2.

On entend ici par "monomode transverse" une structure spatiale particulière du faisceau, caractérisée par le fait qu'elle ne comporte qu'un mode spatial quelle que soit la longueur d'onde considérée du spectre émis.

Comme illustré sur la figure 1, les moyens de guidage de lumière GL sont réalisés sous la forme d'une fibre optique dont les propriétés non linéaires sont fonction de sa structure et de ses dimensions. On utilise une fibre optique dite microstructurée. Ce type de fibre optique présente une structure "opto-géométrique" ajustable qui permet un contrôle du profil de dispersion et autorise une propagation sur toute la bande de transmission de la silice, et préférentiellement selon un mode de propagation monomode transverse. En outre, ce type de fibre optique permet d'accroître de façon significative le confinement du champ électromagnétique guidé, réduisant ainsi le seuil d'apparition des phénomènes non linéaires responsables de l'élargissement spectral.

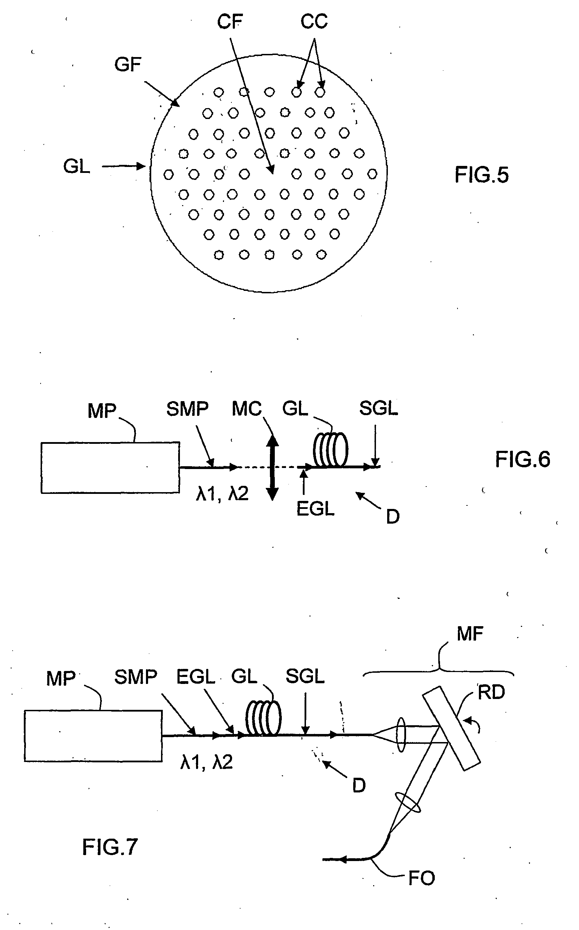

Par exemple, la fibre optique GL peut être une fibre optique à trous du type de celle illustrée sur la figure 5, dans une vue en coupe transversale. Ce type de fibre optique est notamment décrit en détail dans le document brevet EP 1 148 360. Cette fibre microstructurée est constitué de canaux creux CC parallèles à l'axe longitudinal de la fibre optique GL, placés les uns à côté des autres autour du coeur CF de la fibre, selon un pas choisi, de manière à définir une structure à maille (appelée cristal photonique), et formés dans le matériau constituant la gaine GF qui entoure le coeur CF en silice de la fibre optique GL. Il est rappelé qu'un cristal photonique est une structure à bande photonique interdite, constituée d'éléments diffractants (ici des canaux creux CC) définissant une maille (par exemple carrée ou triangulaire) et dont les propriétés physiques permettent de contrôler la propagation de la lumière. Une telle structure est par exemple obtenue par étirement dans une filière, comme décrit dans l'ouvrage de Jean-Michel Lourtioz, "les cristaux photoniques", p. 324, Editions Hermes, 2003. Dans l'exemple illustré sur la figure 5, le diamètre du coeur CF de la fibre GL mesure environ 3 µm, et le pas du réseau est de l'ordre de 3 à 4 µm.

L'efficacité de conversion des photons d'excitation vers les photons du continuum dépend principalement de la puissance crête délivrée par le module de pompage optique MP, des dimensions du coeur CF de la fibre optique GL et de la longueur "active" de ladite fibre optique GL. Ainsi, un module de pompage optique MP délivrant une forte puissance (toutes longueurs d'onde d'excitation confondues) permet l'utilisation d'une fibre optique (ou d'un guide d'ondes) plus court(e).

En présence de deux longueurs d'onde d'excitation λ1 et λ2, respectivement de 1064 nm et 532 nm, on peut utiliser une fibre optique microstructurée GL en silice, présentant un coeur de 3 µm de diamètre et de quelques mètres de long.

L'élargissement spectral correspondant à la génération de la lumière polychromatique large spectre s'effectue ici en un unique passage dans la fibre optique microstructurée GL. Mais, on pourrait prévoir plusieurs passages. Il est important de noter que l'élargissement spectral est sensiblement indépendant du signe de la dispersion chromatique de la fibre optique GL (ou guide d'ondes), ce qui permet de réduire les contraintes sur les paramètres optogéométriques des moyens de guidage de lumière GL.

Lorsque la lumière polychromatique doit être polarisée, les moyens de guidage de lumière GL peuvent être éventuellement du type dit "à sélection de polarisation", ou "à maintien de polarisation".

Le couplage entre la sortie SMP du module de pompage optique MP et l'entrée EGL des moyens de guidage de lumière GL peut se faire soit directement, comme dans l'exemple illustré sur la figure 1, soit indirectement, comme dans le second mode de réalisation illustré sur la figure 6.

Un couplage direct peut être envisagé, notamment, lorsque les photons (ou rayonnement) d'excitation sont délivrés par le module de pompage optique MP sur une sortie SMP constituée de moyens de guidage de lumière, comme par exemple un guide de lumière (ou d'ondes) ou une portion de fibre optique.

Dans le cas d'un couplage indirect, le dispositif D, selon l'invention, comporte des moyens de couplage MC qui peuvent être réalisés, par exemple, sous la forme d'une lentille intercalée entre la sortie SMP du module de pompage optique MP et l'entrée EGL des moyens de guidage de lumière GL (voir figure 6).

Par ailleurs, le dispositif D, selon l'invention, décrit ci-avant, est destiné à délivrer une lumière polychromatique continue sur un large spectre, visible et/ou ultraviolet et/ou infrarouge. Mais, on peut envisager qu'il soit couplé à (ou qu'il comprenne) des moyens de filtrage MF de manière à filtrer (ou sélectionner) les photons du continuum, générés dans les moyens de guidage de lumière GL, afin de délivrer des photons (ou rayonnement) selon des longueurs d'onde choisies ou des portions choisies du spectre continu. Cela permet de synthétiser une source de lumière sur mesure.

Tout type de moyens de filtrage MF peut être envisagé. Mais, il est avantageux qu'ils soient intégrés dans les moyens de guidage de lumière GL, par exemple sous la forme d'un (ou plusieurs) réseau(x) de Bragg (placés en série), bien connu(s) de l'homme de l'art. En effet, un réseau de Bragg peut être défini dans une partie terminale couplée à la sortie SGL des moyens de guidage de lumière GL, ou dans une partie terminale de cette sortie SGL, par exemple par une modulation locale d'indice selon un pas et une longueur choisis, comme illustré schématiquement sur la figure 1. Dans ce cas, en choisissant judicieusement la structure du ou des réseaux de Bragg, on peut synthétiser une source émettant une ou plusieurs longueurs d'onde choisies.

En variante, on peut envisager d'utiliser une (ou plusieurs) cavité(s) Fabry-Perot (placées en série).

Mais, les moyens de filtrage MF peuvent être extérieurs aux moyens de guidage de lumière GL, et constituer un élément rapporté. Dans ce cas, ils peuvent par exemple, comme illustré sur la figure 7, être couplés à la sortie SGL des moyens de guidage de lumière GL et comporter un réseau de diffraction RD éclairé en faisceau parallèle et chargé de diffracter la lumière pour délivrer un faisceau monochromatique à un autre guide de lumière FO, comme par exemple une fibre optique FO, chargé d'effectuer un filtrage spatial pour la sélection spectrale. Cet agencement, de technologie plus simple qu'un réseau de Bragg, permet de réaliser une source continûment accordable en longueur d'onde dans la plage d'émission de la source de lumière polychromatique. L'accord en longueur d'onde est alors obtenu par la rotation du réseau de diffraction RD.

L'invention peut être utilisée dans de nombreux domaines, notamment du fait de la cohérence transverse et de la polychromie de la lumière produite.

Un premier domaine est la métrologie de grandeurs physiques. Le dispositif D selon l'invention peut constituer la source de lumière blanche d'un dispositif de micro stratigraphie optique, par exemple du type de celui décrit dans le document brevet FR 2738343. Dans ce dispositif, une lumière blanche est transportée par une fibre optique jusqu'à un objectif de microscope qui la focalise sur un échantillon (ou objet). L'objectif de microscope présente un chromatisme choisi de manière à focaliser toutes les longueurs d' onde contenues dans la lumière blanche en une côte Z. La détection s'effectue en mode confocal avec codage chromatique de l'axe de mesure. Le spectromètre permet d'analyser le spectre de la lumière réfléchie par l'échantillon et de déduire certaines de ses caractéristiques, comme par exemple sa position par rapport au détecteur et les épaisseurs optiques des couches qui le constituent.

La précision des mesures effectuées dépend de la stabilité temporelle de la source de lumière blanche et du bilan photométrique, qui dépend en premier lieu de la luminance énergétique (ou puissance émise par unité de surface et par unité d'angle solide) de la source. De telles caractéristiques sont offertes par la source selon l'invention. A titre d'exemple, on pourrait intégrer dans le dispositif précité un dispositif selon l'invention délivrant un faisceau présentant par exemple les caractéristiques suivantes : diamètre de coeur de 6 µm, puissance de 3 mW, ouverture numérique égale à 0,4, et luminance moyenne (entre 400 nm et 700 nm) égale à 200 W.mm⁻².sr⁻¹. Comparée aux sources couramment utilisées (lampe à quartz ou arc au xénon), la source de lumière selon l'invention est 1000 fois plus puissante, permettant ainsi de réduire d'un facteur 1000 le temps d'intégration pour un rapport signal à bruit identique. Un tel gain de temps est particulièrement utile dans les applications liées au contrôle en ligne de la qualité de fabrication de produits tels que des films plastiques ou des emballages en verre ou en plastique.

Un deuxième domaine est la microscopie optique, et notamment l'imagerie tomographique de matériaux biologiques ou non. Par exemple, le dispositif D selon l'invention peut constituer la source de lumière blanche d'un dispositif de tomographie optique cutanée in vivo du type de celui décrit dans le document brevet FR 2738140. Ce dispositif constitue un microscope confocal à codage chromatique longitudinal utilisant un spectrophotomètre multicanaux d'analyse. Un tel dispositif requiert une source de lumière blanche présentant une brillance suffisamment élevée pour permettre des prises de vues selon une cadence vidéo en milieu biologique. La source selon l'invention est donc particulièrement bien adaptée à ce type de dispositif. Elle l'est encore plus lorsque la tomographie optique est dite cohérente, comme dans le cas de la technique OCT pour "Optical Coherence Tomography", laquelle requiert une source large bande à faible cohérence temporelle. Cette technique OCT est notamment utilisée lors des biopsies à haute résolution. Dans cette application OCT, la largeur spectrale de la source selon l'invention permet d'éviter l'utilisation simultanée de plusieurs sources centrées sur diverses longueurs d'onde.

Un troisième domaine est lamicroscopie tridimensionnelle, notamment dans les applications telles que la profilométrie de surfaces ou l'examen de cellules biologiques (par exemple sanguines).

Un quatrième domaine regroupe l'analyse par contraste de phase et la strioscopie, pour lesquelles il est nécessaire de disposer d'une sources de lumière présentant une grande cohérence spatiale pour illuminer en lumière parallèle un objet de phase. Dans ces deux applications, on forme une image d'une source de lumière dans le plan focal d'une optique d'imagerie. Cette image est stoppée (strioscopie) ou déphasée (contraste de phase) par rapport à la lumière diffractée par l'objet observé. L'image de l'objet, résultant de la diffraction, est observée dans le plan conjugué. Ce type d'application nécessite une source de lumière présentant une ponctualité et une grande brillance, qui sont deux caractéristiques des sources selon l'invention. Ces analyses sont notamment utilisées en microscopie optique dans le domaine de la biologie, par exemple pour l'observation de cellules faiblement réfringentes, ainsi qu'en métrologie, par exemple pour mesurer des micro rugosités de surface sur des optiques de précision. On peut notamment citer les techniques de mesure utilisant la projection de lumière structurée, et les analyseurs de front d'onde de type Shack-Hartmann fonctionnant en lumière blanche et pour lesquels le bruit de granularité laser (ou l'effet "speckle") peut être éliminé. Ici, l'invention constitue un avantage important par rapport à un laser monochromatique.

Un cinquième domaine est l'interférométrie, notamment celle dite à faible cohérence. On peut en effet utiliser une source selon l'invention pour contrôler des optiques de très haute précision, telles que celles utilisées en photolithographie dans l'ultraviolet, comme cela est notamment décrit dans le document de A. Courteville, "Méthodes et techniques nouvelles pour l'industrie", colloque de la SFO, Belfort 17-21 novembre 2003. On peut également utiliser une source selon l'invention dans des interféromètres à fibre optique du type de celui décrit dans le document brevet US 2002/085208, ou bien dans le domaine des capteurs biologiques et/ou chimiques du type de celui décrit dans le document "Optical biosensors. Monitoring studies of glycopeptide antibiotic fermentation using white light interference", Analytical Chemistry, vol. 73, N° 17, september 1, 2001.

Un sixième domaine est la surveillance ou l'observation de bâtiments ou monuments. Il a été proposé, par exemple dans le document de F. Figuera et al, "Evaluation of white light Fabry-Perot interferometry fiber-optic gages for small strains", Experimental Techniques, p. 31-36, July/August 2003, de coupler une source de lumière blanche à une cavité Fabry-Perot pour constituer un capteur de contrainte destiné, notamment, à l'auscultation d'ouvrages de génie civil. Ce type d'application nécessite une grande fiabilité du système de mesure des contraintes, laquelle dépend principalement de la durée de vie des sources de lumière blanche des différents capteurs (parfois une centaine montés en parallèle). Les lampes à incandescence actuellement utilisées présentant une durée de vie bien inférieure à celle offerte par les sources selon l'invention, notamment lorsqu'il s'agit de sources laser, l'invention est donc particulièrement bien adaptée à ce type d'application. D'une manière générale, la source selon l'invention permet de satisfaire à de nombreuses contraintes spectrales et énergétiques imposées par des réseaux de capteurs multiplexés à l'aide de fibres optiques couplées à des réseaux de Bragg, comme décrit dans le document de A. Othonos, "Fiber bragg gratings : Fundamentals and applications in telecommunications and sensing", Artech House Optoelectronics Library, Hardcover, June 1999.

Un septième domaine est l'observation LIDAR (pour "Light Detection And Ranging"). Il a été proposé, notamment dans le document brevet US 5,394,243, un dispositif de mesure LIDAR destiné à la mesure de la vitesse du vent en basse altitude (typiquement entre 10 m et 100 m). Un tel dispositif comprend une source de lumière à large spectre, filtrée en émission comme en réception par un interféromètre Fabry-Perot. La spectroscopie de la lumière diffusée par l'atmosphère permet de déterminer l'effet Doppler et d'en déduire un vecteur vitesse, en particulier lorsque le faisceau de lumière fait l'objet d'un balayage conique. La source selon l'invention est donc particulièrement bien adaptée à ce type d'application puisqu'elle permet une focalisation à grande distance, qu'elle offre une grande puissance dans une large gamme de longueurs d'onde et un bruit sensiblement plus faible que le bruit de partition offert par les diodes laser multimodes utilisées actuellement. D'une manière plus générale, l'invention est particulièrement bien adaptée à la spectroscopie des solides, des liquides et des gaz. En particulier, l'invention permet d'envisager une application de type LIDAR atmosphérique pour la détection et le dosage d'espèces gazeuses, ainsi qu'une application de type cellule de mesure à passages multiples, laquelle est notamment décrite dans le document "Two-mirror multipass absorption cell", Applied Optics, vol. 20, N°6, 15 march 1981.

Un huitième domaine est la spectroscopie d'objets microscopiques, laquelle requiert la focalisation de la lumière excitatrice en un très petit point. La source selon l'invention pouvant émettre dans l'ultraviolet, le visible et l'infrarouge et pouvant être aisément focalisée, elle est donc particulièrement bien adaptée aux analyses spectroscopiques d'objets microscopiques tels que des chromophores naturels de cellules. Il est ainsi possible d'étudier les propriétés optiques d'erythrocytes au niveau cellulaire ou subcellulaire. Par ailleurs, la forte puissance offerte par la source selon l'invention permet en outre une utilisation dans le domaine de la microspectroscopie de flux, en particulier pour l'étude des phénomènes de coloration obtenus dans les diagrammes de diffraction décrits dans l'ouvrage de Kerker, "The scattering of light and other electromagnetic radiation", p. 396, 1969.

Un neuvième domaine est la transmission d'images, éventuellement holographiques, à l'aide de fibres optiques. Cette transmission d'informations s'effectue à l'aide d'une technique de modulation spectrale qui nécessite une répartition spectrale de lumière sensiblement constante dans une large gamme de longueurs d'onde et sous une forte puissance de manière à compenser les pertes intrinsèques aux fibres optiques de transmission. En raison de ses caractéristiques, la source selon l'invention est donc particulièrement bien adaptée à cette application.

De nombreuses autres applications peuvent encore être envisagées, et notamment dans le domaine de l'holographie en lumière blanche et de la photographie dite de Lippmann, ou bien dans le domaine de la manipulation d'atomes ou de molécules (par exemple pour couvrir une ou plusieurs raies d'absorption optique d'un édifice atomique, comme cela est décrit dans le document "Atom cooling by white light", Applied Physics B 54, p. 428-433,1992).

L'invention ne se limite pas aux modes de réalisation de dispositif de génération de lumière blanche décrits ci-avant, seulement à titre d'exemple, mais elle englobe toutes les variantes que pourra envisager l'homme de l'art dans le cadre des revendications ci-après.

## Revendications

1. Dispositif de génération d'une lumière polychromatique, comprenant :
- des moyens de pompage optique (MP) qui comprennent une source laser (SL) avec un convertisseur de fréquence (DF) pour délivrer du rayonnement à une première et une seconde longueurs d'onde de 1064 et 532 nanomètres, respectivement,
- une fibre optique microstructurée (GL) présentant un profil de dispersion comportant une longueur d' onde d'annulation entre ladite première et ladite seconde longueurs d'onde, et agencée, en cas d' excitation par ledit rayonnement dans un régime d'exitation non linéaire, pour délivrer sur une sortie (SGL) une lumière polychromatique, le profil de dispersion de ladite fibre optique microstructurée restant de même signe entre ladite longueur d'onde d'annulation, qui est d' environ 800 nanomètres, et 1800 nanométres.

2. Dispositif selon la revendication 1, dans lequel ladite fibre optique microstructurée et de type monomode, de manière à délivrer sur sa sortie une lumière polychromatique monomode transverse.

3. Dispositif selon l'une des revendications 1 et 2, dans lequel lesdits moyens de pompage optique (MP) sont agencés pour délivrer ledit rayonnement de façon impulsionnelle et synchronisée temporellement.

4. Dispositif selon l'une des revendications 1 et 2, ladite fibre optique microstructurée lesdits moyens de pompage optique (MP) sont agencés pour délivrer ledit rayonnement de façon continue ou quasi continue.

5. Dispositif selon la revendication 1, dans lequel le convertisseur de fréquence (DF) est agencé sous la forme d'au moins un doubleur de fréquence propre à délivrer ledit rayonnement avec ladite seconde longueur d'onde d'excitation (λ2) deux fois plus petite que ladite première longueur d'onde d'excitation (λ1).

6. Dispositif selon la revendication 1, dans lequel ladite fibre optique microstucturée est choisie dans un groupe comprenant au moins une fibre à trous et une fibre photonique.

7. Dispositif selon l'une des revendications 1 à 6, dans lequel ladite fibre optique microstucturée est du type dit à sélection de polarisation.

8. Dispositif selon l'une des revendications 1 à 7, dans lequel ladite fibre optique microstucturée est du type dit à maintien de polarisation.

9. Dispositif selon l'une des revendications 1 à 8, comprenant des moyens de filtrage (MF) propres à filtrer certaines desdites longueurs d'onde du rayonnement en aval de ladite fibre optique microstucturée.

10. Dispositif selon la revendication 9, dans lequel lesdits moyens de filtrage (MF) comprennent au moins un réseau de Bragg.

11. Dispositif selon l'une des revendications 1 à 10, comprenant des moyens de couplage (MC) agencés de manière à coupler lesdits moyens de pompage optique (MP) à une entrée (EGL) de ladite fibre optique microstucturée.

12. Utilisation d'un dispositif (D) selon l'une des revendications précédentes dans un domaine choisi dans un groupe comprenant au moins la métrologie de grandeurs physiques, la microscopie optique, et en particulier l'imagerie tomographique et la microscopie tridimensionnelle, la spectroscopie, l'analyse médicale d'échantillons, et en particulier la cytométrie de flux, l'holographie médicale, la transmission d'images, et en particulier la transmission d'images holographiques, la manipulation de particules de dimensions microscopiques et sub-microscopiques, et l'interférométrie.

## Claims

1. Device for generating a polychromatic light, comprising:
- optical pumping means (MP) which comprise a laser source (SL) with a frequency converter (DF) for delivering radiation at a first and a second wavelength of 1064 and 532 nanometres, respectively,
- a microstructured optical fibre (GL) exhibiting a dispersion profile comprising a cancellation wavelength between the said first and the said second wavelength, and designed, in the event of excitation by the said radiation in a non-linear excitation regime, to deliver on an output (SGL) a polychromatic light,
the dispersion profile of the said microstructured optical fibre remaining of the same sign between the said cancellation wavelength, which is about 800 nanometres, and 1800 nanometres.

2. Device according to Claim 1, in which the said microstructured optical fibre is of monomode type, so as to deliver on its output a transverse monomode polychromatic light.

3. Device according to one of Claims 1 and 2, in which the said optical pumping means (MP) are designed to deliver the said radiation in a pulsed and temporally synchronized manner.

4. Device according to one of Claims 1 and 2, in which the said optical pumping means (MP) are designed to deliver the said radiation in a continuous or quasi-continuous manner.

5. Device according to Claim 1, in which the frequency converter (DF) is designed in the form of at least one frequency doubler suitable for delivering the said radiation with the said second excitation wavelength (λ2) having half the said first excitation wavelength (λ1).

6. Device according to Claim 1, in which the said microstructured optical fibre is chosen from a group comprising at least a holey fibre and a photonic fibre.

7. Device according to one of Claims 1 to 6, in which the said microstructured optical fibre is of the so-called polarization selection type.

8. Device according to one of Claims 1 to 7, in which the said microstructured optical fibre is of the so-called polarization maintaining type.

9. Device according to one of Claims 1 to 8, comprising filtering means (MF) suitable for filtering certain of the said wavelengths of the radiation downstream of the said microstructured optical fibre.

10. Device according to Claim 9, in which the said filtering means (MF) comprise at least one Bragg grating.

11. Device according to one of Claims 1 to 10, comprising coupling means (MC) designed so as to couple the said optical pumping means (MP) to an input (EGL) of the said microstructured optical fibre.

12. Use of a device (D) according to one of the preceding claims in a field chosen from a group comprising at least the metrology of physical quantities, optical microscopy, and in particular tomographic imaging and three-dimensional microscopy, spectroscopy, medical analysis of samples, and in particular flow cytometry, medical holography, the transmission of images, and in particular the transmission of holographic images, the manipulation of particles of microscopic and sub-microscopic dimensions, and interferometry.

## Patentansprüche

1. Vorrichtung zum Erzeugen eines polychromatischen Lichtes, mit:
- Einrichtungen zum optischen Pumpen (MP), die eine Laserquelle (SL) mit einem Frequenzumrichter (DF) aufweisen, um eine Strahlung bei einer ersten und einer zweiten Wellenlänge von 1064 bzw. 532 Nanometer zu liefern,
- einer mikrostrukturierten optischen Faser (GL), die ein Verteilprofil aufweist, mit einer Annulierungswellenlänge zwischen der ersten und der zweiten Wellenlänge, und ausgebildet ist, um, im Fall der Anregung durch die Strahlung in einem nicht linearen Anregungszustand, an einem Ausgang (SGL) ein polychromatisches Licht zu liefern, wobei das Streuungsprofil der mikrostrukturierten optischen Faser vom selben Vorzeichen verbleibt zwischen der Annulierungswellenlänge, die ungefähr 800 Nanometer und 1800 Nanometer beträgt.

2. Vorrichtung nach Anspruch 1, bei der die mikrostrukturierte optische Faser vom monomoden Typ ist, derart, dass sie an ihrem Ausgang ein quermonomodes polychromatisches Licht liefert.

3. Vorrichtung nach Anspruch 1 oder 2, bei der die optischen Pumpeinrichtungen (MP) ausgebildet sind, um die Bestrahlung auf impulsartige und zweitweise synchronisierte Weise zu liefern.

4. Vorrichtung nach Anspruch 1 oder 2, bei der die optischen Pumpeinrichtungen (MP) ausgebildet sind, um die Strahlung auf kontinuierliche oder quasi kontinuierliche Weise zu liefern.

5. Vorrichtung nach Anspruch 1, bei der der Frequenzumwandler (DF) ausgebildet ist in Form von mindestens einem Frequenzverdoppler, der in der Lage ist, die Strahlung mit der zweiten Anregungswellenlänge (λ2) zu liefern, die zweimal kleiner ist als die erste Anregungswellenlänge (λ1).

6. Vorrichtung nach Anspruch 1, bei der die mikrostrukturierte optische Faser gewählt wird aus einer Gruppe, die wenigstens eine Lochfaser und eine Photonenfaser aufweist.

7. Vorrichtung nach einem der Ansprüche 1 bis 6, bei der die mikrostrukturierte optische Faser vom Typ genannt mit Polarisationswahl ist.

8. Vorrichtung nach einem der Ansprüche 1 bis 7, bei der die mikrostrukturierte optische Faser vom Typ genannt mit Beibehalten der Polarisation ist.

9. Vorrichtung nach einem der Ansprüche 1 bis 8, mit Filtereinrichtungen (MF), die in der Lage sind, gewisse der Wellenlängen der Strahlung unterhalb der mikrostrukturierten optischen Faser zu filtern.

10. Vorrichtung nach Anspruch 9, bei der Filtereinrichtungen (MF) wenigstens ein Bragg-Netz aufweisen.

11. Vorrichtung nach einem der Ansprüche 1 bis 10, mit Kupplungseinrichtung (MC), die derart ausgestaltet sind, dass sie die optischen Pumpeinrichtungen (MP) mit einem Eintritt (EGL) der mikrostrukturierten optischen Faser kopppeln.

12. Verwendung einer Vorrichtung (D) nach einem der vorhergehenden Ansprüche in einem Bereich gewählt aus einer Gruppe mit wenigstens der Metrologie von physischen Größen, der optischen Mikroskopie und insbesondere der Bild-Tomographie und der dreidimensionalen Mikroskopie, der Spektroskopie, der medizinischen Musteranalyse und insbesondere der Durchflusszytometrie, der medizinischen Holografie, der Bildübertragung und insbesondere der Übertragung holografischer Bilder, der Teilchenmanipulation von mikroskopischer Größe und submikroskopischer Größe und der Interferometrie.
